# FASCICULE DE BREVET EUROPEEN

(11) **EP 3 208 530 B1**
(45) Date de publication et mention de la délivrance du brevet: **04.12.2024**
(21) Numéro de dépôt: 17156450.3
(22) Date de dépôt: 16.02.2017
(51) Int. Cl.: F21V 5/04, F21S 41/143, F21Y 115/10, F21Y 105/10, F21Y 101/00, F21S 41/153, F21S 41/255, F21S 41/20, F21S 41/30, F21S 41/663, F21W 102/165, F21S 41/25

(54) **DISPOSITIF DE PROJECTION DE FAISCEAU LUMINEUX MUNI DE MATRICES DE SOURCES DE LUMIÈRE, MODULE D'ÉCLAIRAGE ET PHARE DE VÉHICULE MUNI D'UN TEL DISPOSITIF**
VORRICHTUNG ZUR PROJEKTION EINES LICHTSTRAHLS, DIE MIT MATRIX VON LICHTQUELLEN AUSGESTATTET IST, LEUCHTMODUL UND KFZ-SCHEINWERFER MIT EINER SOLCHEN VORRICHTUNG
DEVICE FOR PROJECTING LIGHT BEAMS PROVIDED WITH LIGHT SOURCE ARRAYS, LIGHTING MODULE AND VEHICLE HEADLAMP PROVIDED WITH SUCH A DEVICE

(30) Priorité: 22.02.2016 FR 1651415
(43) Date de publication de la demande: 23.08.2017
(73) Titulaire: Valeo Vision, 93012 Bobigny Cedex (FR)
(72) Inventeur: COURCIER, Marine, 75011 Paris (FR); SANCHEZ, Vanesa, 92270 Bois Colombes (FR)
(74) Mandataire: Valeo Visibility

(56) Documents cités:
- EP-A1- 2 357 399
- EP-A1- 2 752 615
- EP-A2- 1 213 178
- EP-A2- 2 682 671
- EP-A2- 2 784 376
- EP-A2- 2 789 900
- EP-A2- 2 827 049
- EP-A2- 2 910 847
- CN-A- 1 948 821
- DE-A1- 102008 061 556
- DE-A1- 102014 210 500
- US-A1- 2014 056 018

## Description

La présente invention concerne un dispositif de projection de faisceau lumineux, notamment pour véhicule automobile, et un projecteur de faisceau lumineux, de type feu de croisement ou feu de route, muni d'un tel dispositif de projection.

Les projecteurs de véhicule automobile sont munis d'un ou de plusieurs modules optiques agencés dans un boîtier fermé par une glace de manière à obtenir un ou plusieurs faisceaux lumineux à la sortie du projecteur. De façon simplifiée, un module optique du boîtier comprend notamment une source de lumière, par exemple une (ou plusieurs) diode(s) électroluminescente(s), qui émet des rayons lumineux, et un système optique comportant une ou plusieurs lentilles et, le cas échéant un réflecteur, pour orienter les rayons lumineux issus de la source lumineuse afin de former le faisceau lumineux de sortie du module optique.

On sait que certains projecteurs de véhicule automobile sont capables de faire varier l'orientation du faisceau lumineux en fonction des besoins du conducteur du véhicule. Ainsi, lorsque le véhicule effectue un virage, un système électronique à bord du véhicule commande une modification de l'orientation du faisceau lumineux afin de l'adapter au champ de vision du conducteur pendant la manoeuvre. Le projecteur déplace alors l'axe du faisceau lumineux dans le sens de rotation du véhicule afin d'éclairer la route plutôt que de projeter le faisceau tout droit.

D'autres projecteurs connus peuvent remplir les fonctions de feux de croisement et de feux de route, avec la même source de lumière. A cette fin, les projecteurs utilisent des moyens mécaniques qui déplacent un élément, appelée plieuse, pour couper une partie du faisceau. En outre, il existe aussi un éclairage de type feu de croisement conçu pour autoroute, dont le faisceau passe légèrement au-dessus de la coupure du faisceau du feu de croisement usuel afin d'améliorer la visibilité de la route lorsque le véhicule se déplace sur autoroute.

Ainsi, on souhaite pouvoir contrôler les rayons lumineux émis par la source pour modifier les dimensions du faisceau lumineux qui sort du projecteur et parvenir à effectuer toutes les fonctions mentionnées précédemment.

Pour y parvenir, le document DE 102008 061 556 décrit un dispositif d'éclairage muni d'une matrice de diodes électroluminescentes, chaque diode étant adressable individuellement. Les diodes sont disposées les unes à côté des autres, chaque diode émettant une composante du faisceau lumineux sortant du projecteur. Ce dispositif permet ainsi de contrôler les dimensions du faisceau lumineux en activant une partie des diodes électroluminescentes correspondant à la taille du faisceau souhaité.

Cependant, les matrices de diodes actuelles ne permettent pas d'obtenir un faisceau lumineux homogène. En effet, les diodes étant espacées d'une distance minimale, il apparaît un intervalle entre les différents faisceaux lumineux composant le faisceau, intervalle qui correspond à l'espacement des diodes.

En outre, dans les systèmes d'éclairage actuels, une résolution accrue du faisceau est demandée, les besoins en nombre de pixels étant donc importants. Ainsi, le nombre de sources lumineuses, qui peut aller de 100 à 600, voire plus, doit être élevé pour répondre à cette nécessité.

Or les matrices de diodes comportant un tel nombre de sources ont plusieurs désavantages supplémentaires. Le premier désavantage tient au coût de fabrication de tels ensembles, car d'une part, elles ne sont pas produites en assez grande série, et d'autre part, leur fabrication est plus chère car plus complexe. Un deuxième désavantage vient de la fragilité d'une telle matrice qui requiert un soin particulier lors de sa manipulation afin d'éviter tout endommagement.

Les documents EP 2 789 900 A2, EP 2 910 847 A2, EP 2 357 399 A1, EP 2 682 671 A2 illustrent également les connaissances de l'homme du métier.

L'invention vise donc à obtenir un module optique configuré pour projeter un faisceau lumineux dont les dimensions et l'orientation sont modifiables, et qui évite les désavantages précités.

Pour cela, l'invention concerne un module optique de projection de faisceau lumineux, notamment d'éclairage automobile, selon l'objet de la revendication 1. Et, un module optique de projection de faisceau lumineux, notamment d'éclairage automobile, selon l'objet de la revendication 6.

Selon l'invention le dispositif optique de projection comprend en amont selon le sens de propagation des rayons lumineux, un ensemble d'au moins deux sous-matrices associées munies chacune de sources primaires de lumière aptes à émettre des rayons lumineux, chaque sous-matrice (20) étant formée par une matrice comprenant au moins deux zones d'émission de lumière différentes, adressables individuellement.

Selon un premier mode de réalisation, le module optique de projection comporte en aval un système primaire optique muni d'une pluralité d'optiques convergentes, chaque optique convergente comprenant un unique micro-dioptre d'entrée convergent, un micro-dioptre d'entrée correspondant à une sous-matrice de sources primaires de lumière et étant disposée en aval de ladite sous-matrice, l'écartement entre les axes optiques de deux optiques convergentes adjacentes correspondant respectivement à l'écartement entre les centres des sous-matrices adjacentes correspondantes
chacune desdites optiques convergentes étant configurées pour former l'image virtuelle d'une sous-matrice dans un plan, les images virtuelles étant formées en amont des sous-matrices de sources primaires, de sorte que les dimensions des images virtuelles soient plus grandes que les dimensions des sous-matrices, et le système optique primaire étant agencé de sorte que les images virtuelles des sous-matrices soient sensiblement adjacentes pour former une distribution de lumière homogène.

Le module optique de projection comporte également des moyens de projection tels une lentille de projection ou un réflecteur, disposés en aval du système optique primaire dans le sens de projection du faisceau lumineux, les moyens de projection étant aptes à projeter un faisceau lumineux à partir des images virtuelles servant de sources de lumière aux moyens de projection qui sont focalisés sur le plan desdites images virtuelles.

Selon un deuxième mode de réalisation, le module optique de projection comporte en aval un système optique primaire muni d'une pluralité d'optiques convergentes, une optique convergente, comprenant un unique micro-dioptre d'entrée avec au moins une portion convexe, étant disposée en aval de chaque source primaire de lumière des sous-matrices, le système optique primaire comprenant un dioptre de sortie pour chaque sous-matrice, l'écartement entre les axes optiques de deux dioptres de sortie adjacents correspondant respectivement à l'écartement entre les centres des sous-matrices adjacentes correspondantes,
lesdites optiques convergents associées à chaque sous-matrice étant configurées pour participer à la formation d'une première image virtuelle homogénéisée de chaque sous-matrice dans un plan, les premières images virtuelles homogénéisées étant formées en amont des sous-matrices de sources primaires, les dimensions des premières images virtuelles des sources primaires étant plus grandes que les dimensions des sources primaires et les premières images virtuelles des sources primaires étant adjacentes de sorte que les premières images virtuelles des sous-matrices soient homogénéisées, et de sorte que les dimensions des premières images virtuelles homogénéisées des sous-matrices soient plus grandes que les dimensions des sous-matrices,
les dioptres de sorties placés en aval de chaque sous-matrice ayant pour fonction de faire une seconde image virtuelle agrandie de la première image virtuelle homogénéisée des sous-matrices, dans un plan,
le système optique primaire étant agencé de sorte que les secondes images virtuelles agrandies soient sensiblement adjacentes pour former une distribution de lumière homogène

Le module optique de projection comporte également des moyens de projection tels une lentille de projection (3) ou un réflecteur, disposés en aval du système optique primaire (4) dans le sens de projection du faisceau lumineux les moyens de projection étant aptes à projeter un faisceau lumineux à partir des secondes images virtuelles servant de sources de lumière aux moyens de projection qui sont focalisés sur le plan desdites secondes images virtuelles.

En outre, on entend dans la présente demande par matrice de sources primaires un ensemble de sources primaires agencé selon au moins deux colonnes par au moins deux lignes, de préférence au moins dix colonnes par au moins trois lignes.

On appelle alors sous-matrice un ensemble composé d'au moins deux sources primaires, disposées en ligne ou en colonne. Par exemple, une sous-matrice peut comprendre une ligne et deux colonnes de diodes. De préférence, elle peut comprendre au moins deux lignes et au moins deux colonnes de diodes. Avantageusement, la matrice de sources mise en oeuvre peut être constituée par des sous-matrices de plusieurs tailles différentes.

Pour mesure l'écartement, on se placera notamment en projection orthogonale sur un plan parallèle aux surfaces émettrices des sources primaires. Si les sous-matrices sont positionnées dans un premier plan et les optiques convergentes ont leur axes optiques perpendiculaires à un second plan passant par lesdites optiques, de préférence parallèle au premier, on mesurera l'écartement respectif en projection sur chacun des plans considérés, ou un seul d'entre eux si les deux plans sont parallèles.

Selon l'invention, les optiques convergentes sont configurées pour former des images virtuelles des sous-matrices, les images virtuelles étant formées en amont des sous-matrices de sources primaires, de sorte que les dimensions des images virtuelles soient plus grandes que les dimensions des sous-matrices.

De plus, la formation d'images virtuelles permet d'obtenir une meilleure compacité selon l'axe optique du dispositif par rapport à un dispositif effectuant une image réelle des sources primaires de lumière, en aval des sources primaires de lumière.

Ainsi, l'invention permet d'utiliser et d'associer des sous-matrices afin de constituer une matrice de sources de lumière de grande dimension. On évite ainsi d'avoir à fabriquer de telles matrices d'un seul tenant (matrice monolithique), ce qui permet de baisser les coûts de production, ainsi que de réduire les pertes en cas de dommages. De plus, on peut facilement choisir la taille de l'ensemble des sous-matrices en juxtaposant les sous-matrices comme on le souhaite, sans devoir fabriquer une grande matrice de taille adaptée à chaque fois.

En outre, les images virtuelles étant formées en amont des sous-matrices de sources lumineuses, elles sont agrandies et minimisent donc l'intervalle entre les faisceaux produits par les sources des différentes sous-matrices. Dans un mode de réalisation préféré, le système optique primaire est configuré de sorte que les images virtuelles soient juxtaposées ou sensiblement juxtaposées, réalisant ainsi une bonne homogénéité de la distribution de lumière entre les sous-matrices, mais aussi en leur sein, entre les sources qui composent lesdites sous-matrices.

On notera que la focalisation des moyens de projection sur les images virtuelles, notamment sur le plan qui contient lesdites images virtuelles, rend le module optique de projection peu sensible aux défauts de réalisation du système optique primaire : si les moyens de projection sont focalisés sur la surface des dioptres, c'est cette surface qui est imagée et donc tous ses défauts de réalisation qui sont rendus visibles, ce qui peut générer des défauts d'homogénéité ou de chromatisme dans le faisceau lumineux projeté. De plus, cela permet d'utiliser une sous-matrice de sources de lumière en association avec l'optique primaire, chaque source et /ou sous-matrice de sources étant individuellement imagée.

Selon différents modes de réalisation de l'invention couverts par les revendications dépendantes et, qui pourront être pris ensemble ou séparément :
- chaque optique convergente comprend un micro-dioptre d'entrée avec au moins une portion convexe ;
- le système optique primaire comprend un dioptre de sortie unique pour tous les micro-dioptres d'entrée,
- le dioptre de sortie a une forme sensiblement sphérique,
- le dioptre de sortie a une forme allongée, avec une définition bifocale ;
- le système optique primaire comprend un micro-dioptre de sortie pour chaque micro-dioptre d'entrée afin d'obtenir des lentilles biconvexes comme optique formant le système optique primaire,
- le système optique primaire est fait d'une seule matière, c'est-à-dire que ses différents éléments constitutifs sont venus de matière ;
- le système optique primaire comporte deux éléments optiques disjoints et venus chacun de matière, le premier élément optique comprenant les dioptre d'entrée, le second élément optique comprenant les dioptres de sortie,
- les sources primaires de lumière sont des diodes électroluminescentes.

Dans le cadre de la présente invention, on désigne par micro-dioptre des dioptres dont les dimensions externes sont inférieures ou égales à 5 fois les dimensions de la source primaire de lumière ou de la sous-matrice de sources primaires de lumière associée. Elles sont en général dans un ordre de grandeur millimétrique. Ainsi par exemple, pour une diode électroluminescente (LED) individuelle dont la surface émettrice est de 1 mm de côté, les dimensions du dioptre associé seront inscrites dans un carré de 5 mm de côté maximum. Si la source primaire est constituée par une sous-matrice de LED, ce sont les dimensions de la sous-matrice qui seront considérées.

De plus, si les sources primaires sont toutes de même dimension, on pourra prévoir que tous les micro-dioptres ont la même dimension. Avantageusement toutefois, on pourra également prévoir que les dioptres associés aux sources en bordure de la matrice, notamment aux extrémités latérales, soient de dimensions plus grande que les autres afin de former une image virtuelle allongée latéralement et verticalement qui donnera un motif lumineux projeté de plus grande taille que les autres, notamment pour produire un éclairement des bas-côtés de la route.

L'invention se rapporte encore à un projecteur de véhicule automobile muni d'un tel module optique.

L'invention sera mieux comprise à la lumière de la description suivante qui n'est donnée qu'à titre indicatif et qui n'a pas pour but de la limiter, accompagnée des dessins joints :
- la figure 1 illustrant de façon schématique, une vue en perspective d'un premier mode de réalisation d'un module de projection non couvert par l'invention,
- la figure 2 illustrant de façon schématique, une vue en perspective agrandie d'une partie du module de projection de la figure 1,
- la figure 3 illustrant de façon schématique, une vue en perspective de la formation d'une image virtuelle sur la partie du module de projection de la figure 2,
- la figure 4 illustrant de façon schématique, une vue de côté du premier mode de réalisation d'un module de projection non couvert par l'invention,
- la figure 5 illustrant de façon schématique, une vue de côté d'une première variante d'un deuxième mode de réalisation d'un module de projection selon l'invention,
- la figure 6 illustrant de façon schématique, une vue de côté d'une deuxième variante du deuxième mode de réalisation d'un module de projection selon l'invention,
- la figure 7 illustrant de façon schématique, une vue de côté d'une troisième variante du deuxième mode de réalisation d'un module de projection selon l'invention,
- la figure 8 illustrant de façon schématique, une vue de côté d'une quatrième variante du deuxième mode de réalisation d'un module de projection selon l'invention,
- la figure 9 illustrant de façon schématique, une vue de côté d'une cinquième variante du deuxième mode de réalisation d'un module de projection selon l'invention,
- la figure 10 illustrant de façon schématique, une vue de côté d'une variante de réalisation du premier mode de réalisation non couvert par 'linvention,
- la figure 11 illustrant de façon schématique, une vue de face d'un premier type de matrice de sources lumineuses,
- la figure 12 illustrant de façon schématique, une vue de face d'un deuxième type de matrice de sources lumineuses,
- la figure 13 illustrant de façon schématique, une vue de face d'un troisième type de matrice de sources lumineuses,
- la figure 14 illustrant de façon schématique, une vue de face d'un quatrième type de matrice de sources lumineuses.

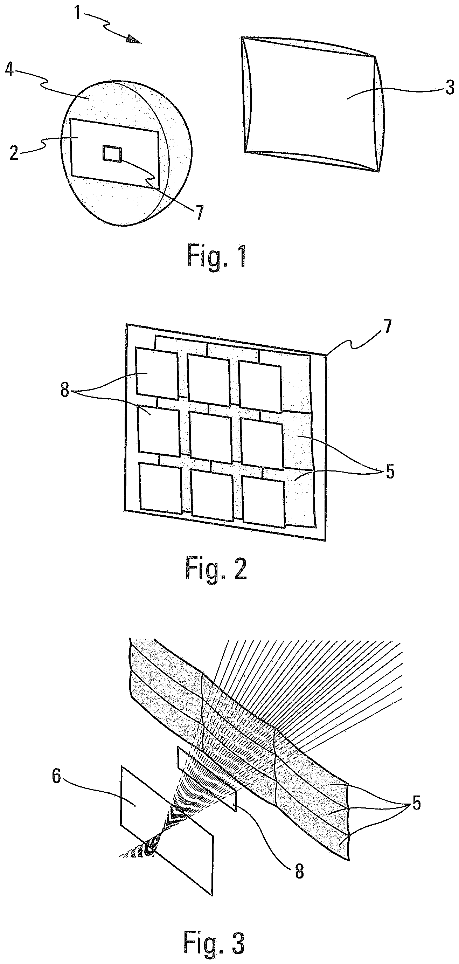

Les figures 1 à 4 montrent un premier mode de réalisation d'un module optique 1 de projection de faisceau lumineux, notamment pour véhicule automobile, non couvert par l'invention. Le module 1 comprend d'amont en aval dans le sens de propagation des rayons lumineux selon l'axe optique 15, une matrice 2 de sources primaires 8 de lumière aptes à émettre des rayons lumineux, un système optique primaire 4 qui transmet les rayons lumineux, et des moyens de projection configurés pour projeter un faisceau lumineux à partir des rayons lumineux incidents transmis par le système optique primaire optique 4.

Sur les figures les moyens de projection prennent la forme d'une lentille de projection 3 unique. Les moyens de projection pourraient néanmoins être formés de l'association munis de plusieurs lentilles, de plusieurs réflecteurs, ou encore d'une combinaison d'une ou plusieurs lentilles et/ou d'un ou plusieurs réflecteurs.

Les sources primaires 8 de lumière sont par exemple des diodes électroluminescentes formant un réseau sur la matrice 2, comme représenté sur la figure 2. Ces matrices 2 de diodes électroluminescentes sont connues et accessibles dans le commerce.

Le système optique primaire 4 a pour fonction de transmettre des rayons lumineux des diodes de sorte que, combiné aux moyens de projection, ici sous la forme d'une lentille de projection 3, le faisceau projeté en dehors du module, par exemple sur la route, soit homogène. A cette fin, le système optique primaire 4 est muni d'une pluralité d'optiques convergentes, qui sont de préférence des micro-dioptres d'entrée 5 convergents. Ici, les micro-dioptres d'entrée 5 présentent une surface convexe, c'est-à-dire qu'ils sont bombés vers l'extérieur, en direction des sources 8. La surface pourrait toutefois être plane, plan-convexe ou concave-convexe. Un micro-dioptre d'entrée 5 est avantageusement disposé en aval de chaque source de lumière 8, c'est-à-dire de chaque diode électroluminescente ou sous-matrice de diodes de la matrice 2, comme montré sur la figure 2. Les micro-dioptres d'entrée 5 forment des images virtuelles 6 des sources primaires 8 de lumière, comme cela est montré sur la figure 3.

Les images virtuelles 6 sont formées en amont de la matrice 2 de sources primaires 8, et servent ainsi de nouvelles sources de lumière pour la lentille de projection. Les images virtuelles 6 obtenues sont agrandies et de préférence sensiblement adjacentes. Autrement dit, elles ne sont pas séparées par un espace significatif. En outre, les images virtuelles mitoyennes peuvent présenter un léger recouvrement entre elles, qui se traduira par un chevauchement de leurs projections respectives par les moyens de projection mesuré sur un écran placé à 25 m du dispositif qui sera de préférence inférieur à 1°. De fait, on cherchera dans la conception du système optique primaire à ce que les images virtuelles soient juxtaposées d'un point de vue paraxial, avec une marge de tolérancement pour assurer la robustesse vis-vis de la précision de positionnement des sources lumineuses et vis-à-vis des défauts de réalisation des surfaces des micro-dioptres : les bords de chaque image virtuelle seront flous, de sorte à obtenir ce léger recouvrement qui assurera une bonne homogénéité du faisceau lumineux généré. Le système optique primaire 4 permet donc de former des images virtuelles 6 des sources primaires 8 de lumière afin d'obtenir une distribution homogène du faisceau, c'est-à-dire que les composantes du faisceau lumineux sont correctement ajustées les unes par rapport aux autres, sans bandes sombres et/ou brillantes (en surintensité) entre elles qui nuiraient au confort de conduite.

En outre, les images virtuelles 6 sont plus éloignées de la lentille de projection 3 par rapport à la matrice réelle des sources lumineuses, ce qui permet de garder un module optique compact.

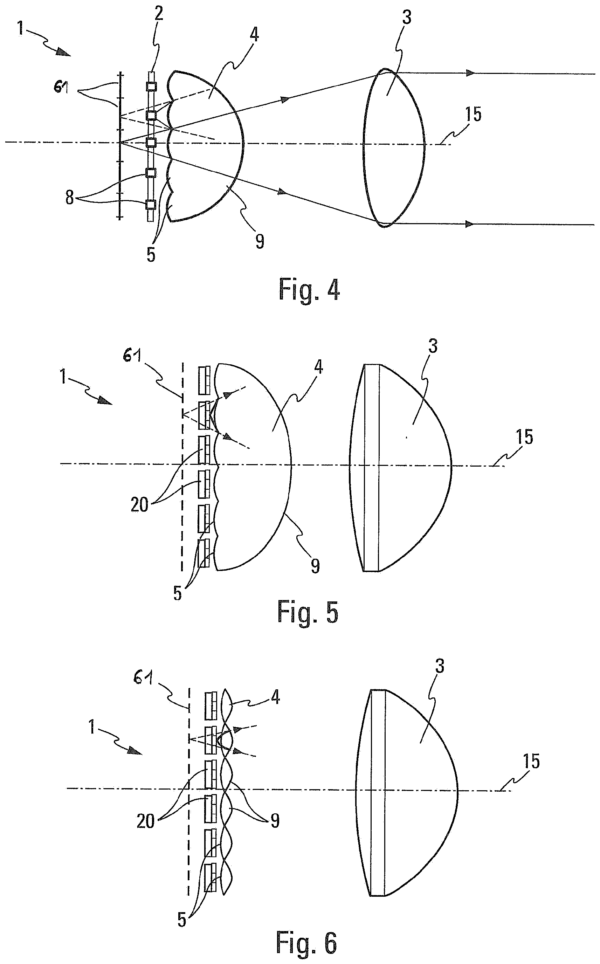

Le système optique primaire 4 est avantageusement configuré pour former des images virtuelles 6 dans un plan 61, les dimensions des images virtuelles 6 étant plus grandes que les dimensions des sources primaires 8 de lumière. Comme le montre la figure 4, l'agrandissement de la taille des images virtuelles 6 permet une juxtaposition des images virtuelles 6 dans le plan 61 de sorte à être adjacentes les unes aux autres. A cette fin, la courbure convexe et le matériau composant le micro-dioptre sont adaptés aux dimensions de la matrice 2 de sources primaires 8, ainsi que le positionnement du système optique primaire optique 4 par rapport à la matrice 2, de sorte que les images virtuelles 6 soient correctement juxtaposées. En fonction de la taille des sous-matrices et en fonction du grandissent recherché, la distance entre les sous-matrices et le système optique primaire 4 sera comprise, bornes incluses, entre 25 à 200% de la taille de la sous-matrice, de préférence de 50 à 100 %, par exemple à une distance de 1 à 7 mm, bornes incluses.

Pour plus de clarté, les images virtuelles 6 n'ont pas été représentées sur les figures 4 à 10. Seul le plan 61 dans lequel ces images virtuelles 6 sont situées a été représenté.

Le module optique 1 de la figure 4 comprend la matrice 2 de sources primaires 8 de lumière, le système optique primaire 4 muni des micro-dioptres d'entrée 5 et des moyens de projection formés par la lentille de projection 3. Le système optique primaire 4 comprend en outre un dioptre de sortie 9 unique pour tous les micro-dioptres d'entrée 5.

Le dioptre de sortie 9 apporte une correction optique du faisceau transmis à la lentille de projection 3. La correction sert notamment à améliorer l'efficacité optique du dispositif et à corriger les aberrations optiques du système 4. A cette fin, le dioptre de sortie 9 a une forme de dôme sensiblement sphérique. Cette forme dévie peu la direction des rayons lumineux du faisceau provenant d'une source disposée sur l'axe optique 15, et qui traversent le dioptre de sortie 9.

Dans l'exemple de réalisation représenté, le dioptre de sortie 9 a une forme de dôme sensiblement sphérique.

Selon une variante non représentée, il aura une forme allongée, de type cylindrique, avec une définition bifocale. En vue frontale, le dioptre de sortie 9 est plus large que haut. Selon un exemple préféré de réalisation de cette variante, le dioptre de sortie 9 présente en section horizontale - donc dans le sens de sa largeur - un grand rayon de courbure, avec une flèche de moins de 5 mm. La surface en section horizontale peut être convexe ou concave, c'est-à-dire que le dioptre de sortie 9 est respectivement convergent ou divergent, cette dernière alternative étant particulièrement intéressante pour réduire l'encombrement du dispositif optique. Toujours selon cet exemple préféré de réalisation, en section verticale - dans le sens de sa hauteur donc - la surface du dioptre de sortie 9 est asphérique, avec une approximation sphérique du premier ordre qui a un rayon compris entre 5 et 10 mm, bornes incluses.

Dans ce premier mode de réalisation, le système optique primaire 4 est fait d'une seule matière, c'est-à-dire venu de matière. Autrement dit, les micro-dioptres d'entrée 5 et le dioptre de sortie 9 forment les faces d'entrée et de sortie d'un même élément, le système optique primaire 4, qui s'apparente à une lentille complexe.

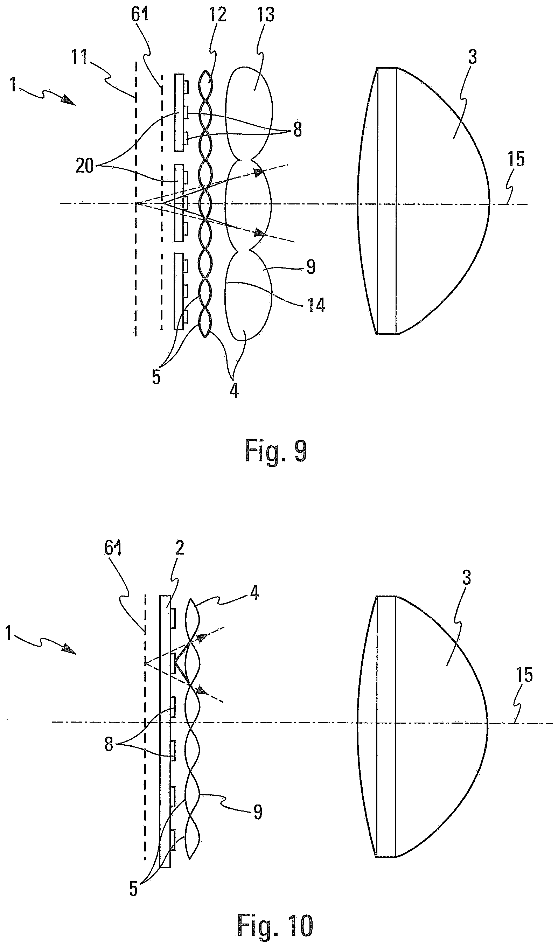

Dans une variante du premier mode de réalisation, représentée sur la figure 10, et également non couvert par l'invention, le système optique primaire 4 comprend un micro-dioptre de sortie 9 pour chaque micro-dioptre d'entrée 5. Le système optique primaire 4 forme alors un ensemble de microlentilles bi convexes, chaque microlentille étant disposée devant une source primaire de lumière. La microlentille ne permet cependant pas de corriger le faisceau global transmis, comme un système optique primaire 4 muni d'un dioptre de sortie 9 unique. Ces microlentilles sont semblables à celles de la deuxième variante du deuxième mode de réalisation représentée sur la figure 6, décrites ci-après. Elles ont l'avantage d'apporter une meilleure homogénéité des images virtuelles et moins de déformation des images.

Dans un second mode de réalisation selon l'invention, représenté sur les figures 5 à 8, le dispositif comporte plusieurs sous-matrices 20 de sources primaires 8 de lumière, à la place de la matrice 2 du mode de réalisation précédent. Les sous-matrices 20 de diodes électroluminescentes sont plus facilement manipulables et moins coûteuses que des matrices de grande taille. Ainsi, il est plus économique d'obtenir une matrice de grande taille en associant plusieurs sous-matrices 20. Une telle composition peut contenir de 100 à 600 diodes électroluminescentes.

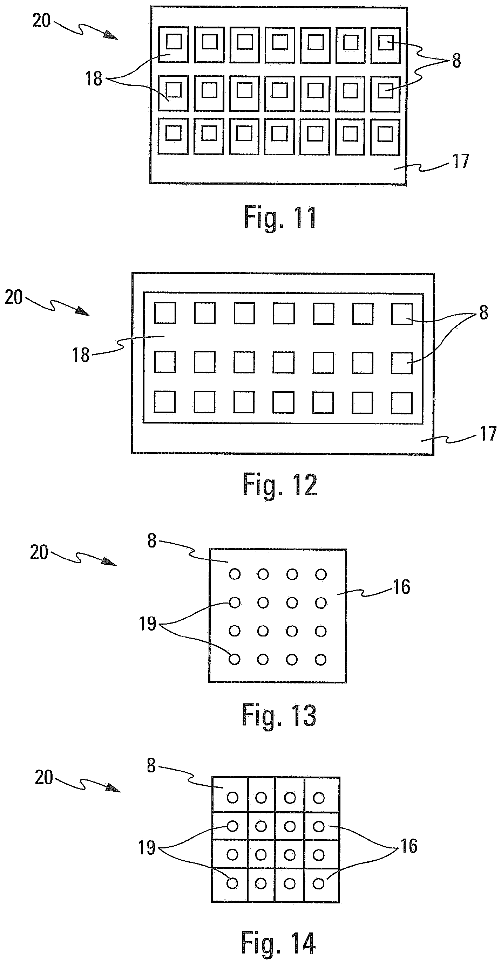

Les figures 11 à 14 représentent différents types de matrices qui peuvent servir de sous-matrice du dispositif selon l'invention. Une telle matrice comprend au moins deux zones d'émission de lumière différentes, qui sont adressables individuellement.

La figure 11 montre une matrice 20 multi puces de sources de lumière 8, de type diode électroluminescente, chaque source 8 étant adressable individuellement. Chaque source 8 est fabriquée séparément sur une puce indépendante, qui est montée sur un élément de maintien 18, lui-même assemblé aux autres sources sur un support 17. La figure 12 représente un deuxième type de matrice 20 multi puces dans laquelle les diodes électroluminescentes sont préassemblées les unes aux autres sur un élément de maintien 18 commun disposé sur un support 17.

Les figures 13 et 14 illustrent des matrices mono-puce 20, dans lesquelles les sources de lumière 8 ont une électrode en commun. Une diode a deux électrodes 16,19 en contact, une première électrode 19 ponctuelle et une deuxième électrode 16 surfacique. Sur la figure 13, les sources 8 sont adressables individuellement en activant la première électrode 19, la deuxième électrode étant la même pour toute les sources 8 de la puce. En revanche, les sources de lumière 8 de la figure 14 ont une deuxième électrode 19 divisée en portion de manière à avoir une deuxième électrode 19 indépendante pour chaque source 8, les premières électrodes 16 étant activables simultanément.

Selon une variante de réalisation particulière, les sous-matrices 20 de lumière peuvent être basées sur une source lumineuse à semi conducteur comprenant une pluralité d'unités électroluminescentes de dimensions submillimétriques, les unités étant réparties dans différentes zones lumineuses activables sélectivement. En particulier, chacune des unités lumineuses électroluminescentes de dimensions submillimétriques prend la forme d'un bâtonnet. En outre, les bâtonnets sont sur un même substrat, qui de préférence comprend du silicium.

Le système optique primaire 4 associe les rayons lumineux des sous-matrices 20 afin de former un faisceau unique ayant les mêmes propriétés que dans le mode de réalisation muni d'une seule matrice. L'invention permet donc non seulement d'utiliser des composants standards présents sur le marché, mais évite en plus les problèmes de dilatation thermique se produisant sur les composants de grande taille.

Les faisceaux formés par les différentes sous-matrices 20 se complètent, avec avantageusement une légère superposition des faisceaux qui n'excède pas 1° d'angle d'ouverture de chaque faisceau. On évite de superposer les différents faisceaux avec un angle plus grand afin de conserver une discrétisation des composantes et garder un faisceau projeté dont les contours sont bien définis.

La figure 5 montre une première variante de réalisation d'un module optique 1 de projection selon l'invention comprenant en amont plusieurs sous-matrices 20 et en aval, des moyens de projection 3 tels qu'une lentille de projection. Le dispositif optique comprend, également entre les sous-matrices 20 et la lentille de projection 3, un système optique primaire 4 muni d'une pluralité d'optiques convergentes, ayant ici des micro-dioptres d'entrée 5 convergents, ici présentant une surface convexe, et configurés pour former des images virtuelles 6 dans un même plan 61. Les micro-dioptres d'entrée 5 sont agencés en aval des sous-matrices 20, un micro-dioptre d'entrée 5 correspondant à une sous-matrice 20 de sources primaires 8 de lumière.

Les images virtuelles 6 des sources de lumière sont formées dans un même plan 61, en amont des sous-matrices 20, de sorte que les dimensions des images virtuelles 6 soient plus grandes que les dimensions des sous-matrices 20, les images virtuelles 6 servant alors de sources de lumière pour la lentille de projection 3.

Comme dans le mode de réalisation de la figure 4, le système optique primaire 4 de la figure 5 a un dioptre de sortie 9 unique, formé pour apporter une correction optique du faisceau transmis à la lentille de projection 3, le dioptre de sortie 9 ayant également une forme de dôme convexe. De plus, le système optique primaire 4 est aussi un élément optique fait d'une seule matière.

Dans une deuxième variante du deuxième mode de réalisation, représentée sur la figure 6, et couvert par l'invention, le système optique primaire 4 comprend un micro-dioptre de sortie 9 pour chaque micro-dioptre d'entrée 5. Ici, le dioptre de sortie 9 n'a pas pour fonction de corriger le faisceau transmis. Le système optique primaire 4 forme alors un ensemble de microlentilles bi convexes. Dans ce mode de réalisation, le module comprend des sous-matrices 20 de sources primaires 8 de lumière, chaque microlentille bi convexe étant disposée en aval d'une sous-matrice 20.

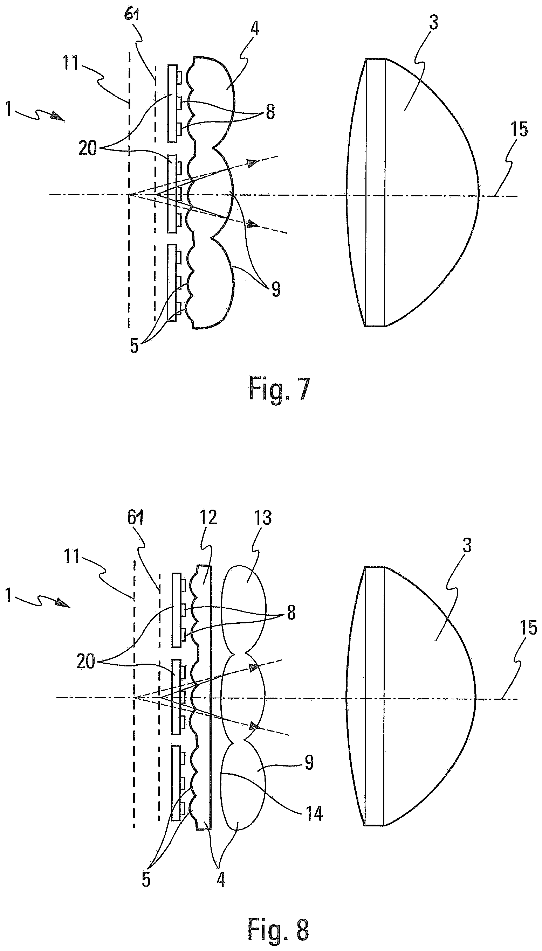

La figure 7 montre une troisième variante du deuxième mode de réalisation du module optique 1 selon l'invention, et qui comprend un système optique primaire 4 muni d'optiques convergentes avec des micro-dioptres d'entrée 5 convexes, agencé en aval des sous-matrices 20 de sources primaires 8 de lumière. Un micro-dioptre d'entrée 5 correspond ici à une source primaire 8 de lumière de chaque sous-matrice 20. Dans cette variante de réalisation, le système optique primaire 4 comprend un dioptre de sortie 9 pour chaque sous-matrice 20. Le dioptre de sortie 9 et les micro-dioptres d'entrée 5 de chaque lentille sont en continuité de matière, de sorte qu'ils forment une lentille complexe. Les lentilles complexes du système optique primaire 4 peuvent en outre être reliées les unes aux autres. Ainsi, le dioptre de sortie 9 génère une image virtuelle agrandie de la sous-matrice, afin que les faisceaux de chaque sous-matrices 20 sont ajustés les uns par rapport aux autres. De plus, un dioptre de sortie 9 pour chaque sous-matrice 20 évite les rayons parasites entre faisceaux de sous-matrices différentes.

En outre, dans ce cas, les dioptres de sortie 9 et les micro-dioptres d'entrée 5 font partie d'un système optique primaire 4 venu de matière. Autrement dit, le système optique primaire 4 ne comprend qu'un seul élément.

La figure 8 décrit une quatrième variante du deuxième mode de réalisation couvert par l'invention, qui est semblable à la troisième variante de la figure 7, la différence résidant dans le système optique primaire 4 qui est séparé en deux éléments 12, 13. Le premier élément 12 comporte les micro-dioptres d'entrée 5 et une face de sortie unique sensiblement plane pour tous les micro-dioptres d'entrée 5. Le second élément 13 est muni d'une face d'entrée présentant un dioptre convexe 14 pour chaque sous-matrice 20, et des dioptres de sortie 9 également pour chaque sous-matrice 20.

La cinquième variante de la figure 9 également couverte par l'invention, est sensiblement la même que la quatrième variante. La forme du premier élément 12 diffère en ce qu'elle comporte un ensemble de microlentilles bi convexes, de façon analogue à la deuxième variante de la figure 6. La deuxième partie 13 est sensiblement la même que dans la quatrième variante.

Les systèmes optiques 4 des troisième, quatrième, et cinquième variantes, conviennent particulièrement bien pour les sous-matrices 20 dont les sources primaires 8 de lumières sont éloignées les unes des autres. Un éloignement de plus de 5% de la largeur de la source primaire 8 de lumière peut être considéré comme un éloignement important. Ainsi, les micro-dioptres d'entrée 5 placés en aval de chaque source primaire 8 de lumière permettent d'homogénéiser, à l'intérieur d'une sous-matrice, selon le processus décrit précédemment, la lumière fournie par les sources primaires 8. Les dioptres de sortie 9 placés en aval de chaque sous-matrice 20 ont pour fonction de faire une seconde image virtuelle, dans un plan 11, homogène entre les sous-matrices.

Lorsqu'on a un dioptre d'entrée 14 dédié à chaque sous-matrice (cas des figures 8 et 9), l'association du dioptre de sortie 9 et du dioptre d'entrée 14 crée les images virtuelles entre sous-matrices. Avantageusement, on génère ainsi moins de déformations géométriques de l'image. Cette homogénéisation entre les sous-matrices 20 Cette homogénéisation entre les sous-matrices est surtout utile dans la mesure où la distance entre les sous-matrices est plus grande que celle séparant les sources de lumières 8.

## Revendications

1. Module optique de projection de faisceau lumineux, notamment d'éclairage automobile, comprenant
- un dispositif optique comprenant en amont selon le sens de propagation des rayons lumineux, un ensemble d'au moins deux sous-matrices (20) associées munies chacune de sources primaires (8) de lumière aptes à émettre des rayons lumineux, chaque sous-matrice (20) étant formée par une matrice comprenant au moins deux zones d'émission de lumière différentes, adressables individuellement,
**caractérisé en ce qu'**il comporte en aval un système optique primaire (4) muni d'une pluralité d'optiques convergentes, chaque optique convergente comprenant un unique micro-dioptre d'entrée (5) convergent, un micro-dioptre d'entrée (5) correspondant à une sous-matrice (20) de sources primaires (8) de lumière et étant disposée en aval de ladite sous-matrice (20), l'écartement entre les axes optiques de deux optiques convergentes adjacentes correspondant respectivement à l'écartement entre les centres des sous-matrices adjacentes correspondantes,
chacune desdites optiques convergentes étant configurée pour former l'image virtuelle (6) d'une sous-matrice (20) dans un plan, les images virtuelles (6) étant formées en amont des sous-matrices (20) de sources primaires (8), de sorte que les dimensions des images virtuelles (6) soient plus grandes que les dimensions des sous-matrices (20), et le système optique primaire étant agencé de sorte que les images virtuelles (6) des sous-matrices (20) soient sensiblement adjacentes pour former une distribution de lumière homogène
et **en ce qu'**il comporte des moyens de projection tels une lentille de projection (3) ou un réflecteur, disposés en aval du système optique primaire (4) dans le sens de projection du faisceau lumineux, les moyens de projection étant aptes à projeter un faisceau lumineux à partir des images virtuelles (6) servant de sources de lumière aux moyens de projection qui sont focalisés sur le plan desdites images virtuelles.

2. Module selon la revendication précédente, **caractérisé en ce que** chaque optique convergente comprend un micro-dioptre d'entrée (5) avec au moins une portion convexe.

3. Module selon la revendication 1 ou 2, **caractérisé en ce que** le système optique primaire (4) comprend un dioptre de sortie unique (9) pour tous les micro-dioptres d'entrée (5).

4. Module selon la revendication 3, **caractérisé en ce que** le dioptre de sortie (9) a une forme sensiblement sphérique.

5. Module selon la revendication 1 ou 2, **caractérisé en ce que** le système optique primaire (4) comprend un micro-dioptre de sortie (9) pour chaque micro-dioptre d'entrée (5) afin d'obtenir des lentilles biconvexes comme optique formant le système optique primaire (4).

6. Module optique de projection de faisceau lumineux, notamment d'éclairage automobile comprenant
- un dispositif optique comprenant en amont selon le sens de propagation des rayons lumineux, un ensemble d'au moins deux sous-matrices (20) associées munies chacune de sources primaires (8) de lumière aptes à émettre des rayons lumineux, chaque sous-matrice (20) étant formée par une matrice comprenant au moins deux zones d'émission de lumière différentes, adressables individuellement, et
**caractérisé en ce qu'**il comporte en aval un système optique primaire (4) muni d'une pluralité d'optiques convergentes, une optique convergente, comprenant un unique micro-dioptre d'entrée (5) avec au moins une portion convexe, étant disposée en aval de chaque source primaire (8) de lumière des sous-matrices (20), le système optique primaire (4) comprenant un dioptre de sortie (9) pour chaque sous-matrice (20), l'écartement entre les axes optiques de deux dioptres de sortie (9) adjacents correspondant respectivement à l'écartement entre les centres des sous-matrices adjacentes correspondantes,
lesdites optiques convergents associées à chaque sous-matrice étant configurées pour participer à la formation d'une première image virtuelle (6) homogénéisée de chaque sous-matrice (20) dans un plan, les premières images virtuelles (6) homogénéisées étant formées en amont des sous-matrices (20) de sources primaires (8), les dimensions des premières images virtuelles (6) des sources primaires étant plus grandes que les dimensions des sources primaires et les premières images virtuelles des sources primaires étant adjacentes de sorte que les premières images virtuelles des sous-matrices soient homogénéisées, et de sorte que les dimensions des premières images virtuelles homogénéisées des sous-matrices (20) soient plus grandes que les dimensions des sous-matrices,
les dioptres de sorties placés en aval de chaque sous-matrice ayant pour fonction de faire une seconde image virtuelle agrandie de la première image virtuelle homogénéisée des sous-matrices, dans un plan,
le système optique primaire étant agencé de sorte que les secondes images virtuelles agrandies soient sensiblement adjacentes pour former une distribution de lumière homogène;
et **en ce qu'**il comporte des moyens de projection tels une lentille de projection (3) ou un réflecteur, disposés en aval du système optique primaire (4) dans le sens de projection du faisceau lumineux les moyens de projection étant aptes à projeter un faisceau lumineux à partir des secondes images virtuelles servant de sources de lumière aux moyens de projection qui sont focalisés sur le plan desdites secondes images virtuelles.

7. Module selon la revendication 6, **caractérisé en ce que** le système optique primaire comporte deux éléments optiques disjoints venus chacun de matière, le premier élément optique (12) comprenant les dioptres d'entrée (5), et le second élément optique (13) comprenant les dioptres de sortie (9).

8. Module selon la revendication 6, **caractérisé en ce que** le système optique primaire (4) est venu de matière.

9. Module selon l'une quelconque des revendications précédentes, **caractérisé en ce que** les sources primaires (8) de lumière sont des diodes électroluminescentes.

10. Projecteur de véhicule automobile comprenant un module optique (1) de projection de faisceau lumineux, selon l'une des revendications précédentes.

## Patentansprüche

1. Optisches Modul zur Projektion eines Lichtstrahls, insbesondere einer Kraftfahrzeugbeleuchtung, umfassend
- eine optische Vorrichtung, umfassend vorgelagert entlang der Ausbreitungsrichtung der Lichtstrahlen eine Anordnung von mindestens zwei zugeordneten Untermatrizen (20), die jeweils mit primären Lichtquellen (8) versehen sind, die geeignet sind, Lichtstrahlen auszusenden, wobei jede Untermatrix (20) durch eine Matrix gebildet wird, die mindestens zwei verschiedene, einzeln adressierbare Lichtemissionszonen umfasst,
**dadurch gekennzeichnet, dass** es nachgelagert ein primäres optisches System (4) aufweist, das mit einer Vielzahl von konvergierenden Optiken versehen ist, wobei jede konvergierende Optik ein einziges konvergierendes Eingangsmikrodiopter (5) umfasst, wobei ein Eingangsmikrodiopter (5) einer Untermatrix (20) von primären Lichtquellen (8) entspricht und der Untermatrix (20) nachgelagert angeordnet ist, wobei der Abstand zwischen den optischen Achsen von zwei benachbarten konvergierenden Optiken jeweils dem Abstand zwischen den Zentren der entsprechenden benachbarten Untermatrizen entspricht,
wobei jede der konvergierenden Optiken so konfiguriert ist, dass sie das virtuelle Bild (6) einer Untermatrix (20) in einer Ebene bildet, wobei die virtuellen Bilder (6) den Untermatrizen (20) der primären Quellen (8) vorgelagert gebildet werden, so dass die Abmessungen der virtuellen Bilder (6) größer sind als die Abmessungen der Untermatrizen (20), und wobei das primäre optische System so angeordnet ist, dass die virtuellen Bilder (6) der Untermatrizen (20) im Wesentlichen benachbart sind, um eine homogene Lichtverteilung zu bilden,
und dass es Projektionsmittel wie eine Projektionslinse (3) oder einen Reflektor aufweist, die in der Projektionsrichtung des Lichtstrahls dem primären optischen System (4) nachgelagert angeordnet sind, wobei die Projektionsmittel geeignet sind, einen Lichtstrahl ausgehend von den virtuellen Bildern (6) zu projizieren, die als Lichtquellen für die Projektionsmittel dienen, die auf die Ebene der virtuellen Bilder fokussiert sind.

2. Modul nach dem vorhergehenden Anspruch, **dadurch gekennzeichnet, dass** jede konvergierende Optik ein Eingangsmikrodiopter (5) mit mindestens einem konvexen Abschnitt umfasst.

3. Modul nach Anspruch 1 oder 2, **dadurch gekennzeichnet, dass** das primäre optische System (4) ein einzelnes Ausgangsdiopter (9) für alle Eingangsmikrodiopter (5) umfasst.

4. Modul nach Anspruch 3, **dadurch gekennzeichnet, dass** das Ausgangsdiopter (9) im Wesentlichen eine Kugelform hat.

5. Modul nach Anspruch 1 oder 2, **dadurch gekennzeichnet, dass** das primäre optische System (4) ein Ausgangsmikrodiopter (9) für jedes Eingangsmikrodiopter (5) umfasst, um bikonvexe Linsen als Optik zu erhalten, die das primäre optische System (4) bilden.

6. Optisches Modul zur Projektion eines Lichtstrahls, insbesondere einer Kraftfahrzeugbeleuchtung, umfassend
- eine optische Vorrichtung, umfassend vorgelagert entlang der Ausbreitungsrichtung der Lichtstrahlen eine Anordnung von mindestens zwei zugeordneten Untermatrizen (20), die jeweils mit primären Lichtquellen (8) versehen sind, die geeignet sind, Lichtstrahlen auszusenden, wobei jede Untermatrix (20) durch eine Matrix gebildet wird, die mindestens zwei verschiedene, einzeln adressierbare Lichtemissionszonen umfasst, und
**dadurch gekennzeichnet, dass** es nachgelagert ein primäres optisches System (4) aufweist, das mit einer Vielzahl von konvergierenden Optiken versehen ist, wobei eine konvergierende Optik, die ein einzelnes Mikroeingangsdiopter (5) mit mindestens einem konvexen Abschnitt umfasst, jeder primären Lichtquelle (8) der Untermatrizen (20) nachgelagert angeordnet ist, wobei das primäre optische System (4) ein Ausgangsdiopter (9) für jede Untermatrix (20) umfasst, wobei der Abstand zwischen den optischen Achsen von zwei benachbarten Ausgangsdioptern (9) jeweils dem Abstand zwischen den Zentren der entsprechenden benachbarten Untermatrizen entspricht,
wobei die konvergenten Optiken, die jeder Untermatrix zugeordnet sind, so konfiguriert sind, dass sie an der Bildung eines ersten homogenisierten virtuellen Bildes (6) jeder Untermatrix (20) in einer Ebene beteiligt sind, wobei die ersten homogenisierten virtuellen Bilder (6) den Untermatrizen (20) der primären Quellen (8) vorgelagert gebildet werden, wobei die Abmessungen der ersten virtuellen Bilder (6) der primären Quellen größer sind als die Abmessungen der primären Quellen und die ersten virtuellen Bilder der primären Quellen benachbart sind, so dass die ersten virtuellen Bilder der Untermatrizen homogenisiert werden, und so dass die Abmessungen der homogenisierten ersten virtuellen Bilder der Untermatrizen (20) größer sind als die Abmessungen der Untermatrizen,
wobei die Ausgangsdiopter, die jeder Untermatrix nachgelagert angeordnet sind, die Funktion haben, ein zweites vergrößertes virtuelles Bild des ersten homogenisierten virtuellen Bildes der Untermatrizen in einer Ebene zu machen,
wobei das primäre optische System so angeordnet ist, dass die zweiten vergrößerten virtuellen Bilder im Wesentlichen nebeneinander liegen, um eine homogene Lichtverteilung zu bilden;
und dass es Projektionsmittel wie eine Projektionslinse (3) oder einen Reflektor aufweist, die in der Projektionsrichtung des Lichtstrahls dem primären optischen System (4) nachgelagert angeordnet sind, wobei die Projektionsmittel geeignet sind, einen Lichtstrahl ausgehend von den zweiten virtuellen Bildern zu projizieren, die als Lichtquellen für die Projektionsmittel dienen, die auf die Ebene der zweiten virtuellen Bilder fokussiert sind.

7. Modul nach Anspruch 6, **dadurch gekennzeichnet, dass** das primäre optische System zwei getrennte optische Elemente aufweist, die jeweils aus Material bestehen, wobei das erste optische Element (12) die Eingangsdiopter (5) umfasst und das zweite optische Element (13) die Ausgangsdiopter (9) umfasst.

8. Modul nach Anspruch 6, **dadurch gekennzeichnet, dass** das primäre optische System (4) aus Material besteht.

9. Modul nach einem der vorhergehenden Ansprüche, **dadurch gekennzeichnet, dass** die primären Lichtquellen (8) Leuchtdioden sind.

10. Kraftfahrzeugprojektor, umfassend ein optisches Modul (1) zur Projektion eines Lichtstrahls nach einem der vorhergehenden Ansprüche.

## Claims

1. Optical light beam projection module, notably for motor vehicle lighting, comprising :
- an optical device comprising upstream in the direction of propagation of the light rays, a set of at least two associated submatrices (20) each provided with primary light sources (8) capable of emitting light rays, each submatrix (20) being formed by a matrix comprising at least two different light emission zones, which are individually addressable,
**characterized in that** it comprises downstream, a primary optical system (4) provided with a plurality of convergent optics, each convergent optics comprising a single convergent input micro-dioptre (5), an input micro-dioptre (5) corresponding to a submatrix (20) of primary light sources (8) and being arranged downstream of said submatrix (20), the separation between the optical axes of two adjacent convergent optics corresponding respectively to the separation between the centers of the corresponding adjacent submatrices,
each of said convergent optics being configured to form the virtual image (6) of one submatrice (20) in a plane, the virtual images (6) being formed upstream of the submatrices (20) of primary sources (8), such that the dimensions of the virtual images (6) are greater than the dimensions of the submatrices (20), and the primary optical system being arranged such that the virtual images (6) of the submatrices (20) are substantially adjacent to form a uniform light distribution
and **in that** it comprises projection means, such as a projection lens (3) or a reflector, arranged downstream of the primary optical system (4) in the direction of projection of the light beam, the projection means being capable of projecting a light beam from the virtual images (6) serving as light sources to the projection means which are focused on the plane of said virtual images.

2. Module according to the preceding claim, **characterized in that** each convergent optic comprises an input micro-dioptre (5) with at least one convex portion.

3. Module according to Claim 1 or 2, **characterized in that** the primary optical system (4) comprises a single output dioptre (9) for all the input micro-dioptres (5).

4. Module according to Claim 3, **characterized in that** the output dioptre (9) has a substantially spherical form.

5. Module according to Claim 1 or 2, **characterized in that** the primary optical system (4) comprises an output micro-dioptre (9) for each input micro-dioptre (5) in order to obtain biconvex lenses as optics forming the primary optical system (4).

6. Optical light beam projection module, notably for a motor lighting, comprising:
- an optical device comprising upstream in the direction of propagation of the light rays, a set of at least two associated submatrices (20) each provided with primary light sources (8) capable of emitting light rays, each submatrix (20) being formed by a matrix comprising at least two different light emission zones, which are individually addressable, and,
**characterized in that** it comprises downstream, a primary optical system (4) provided with a plurality of convergent optics, a convergent optic, comprising a single input micro-dioptre (5) with at least one convex portion, being arranged downstream of each primary light source (8), the primary optical system (4) comprising an output dioptre (9) for each submatrix (20), the separation between the optical axes of two adjacent output diopters (9) corresponding respectively to the separation between the centers of the corresponding adjacent submatrices,
said convergent optics associated with each submatrix being configured to participate to the formation of a first uniformed virtual image (6) of each submatrice (20) in a plane, the first uniformed virtual images (6) being formed upstream of the submatrices (20) of primary sources (8), the dimensions of the first virtual images (6) of the primary light sources being greater than the dimensions of the primary light sources and the first virtual images of the primary light sources being adjacent such that the first virtual images of the submatrices are uniformed, and such that the dimensions of the first uniformed virtual images of the submatrices (20) are greater than the dimensions of the submatrices,
the output diopters placed downstream of each submatrix having a function of making a second enlarged virtual image of the first uniformed virtual image of the submatrices, in a plane,
the primary optical system (4) being arranged such that the second enlarged virtual images (6) are substantially adjacent to form a uniform light distribution;
and **in that** it comprises projection means, such as a projection lens (3) or a reflector, arranged downstream of the primary optical system (4) in the direction of projection of the light beam, the projection means being capable of projecting a light beam from the second virtual images serving as light sources to the projection means which are focused on the plane of said second virtual images.

7. Module according to any Claim 6, **characterized in that** the primary optical system comprises two separate optical elements each made of an integral single piece of material, the first optical element (12) comprising the input dioptres (5), and the second optical element (13) comprising the output dioptres (9).

8. Module according to claim 6, **characterized in that** the primary optical system (4) is made of an integral single piece of material.

9. Device according to any one of the preceding claims, **characterized in that** the primary light sources (8) are light-emitting diodes.

10. Motor vehicle headlight comprising an optical light beam projection module (1) according to one of the preceding claims.
